# FASCICULE DE BREVET EUROPEEN

(11) **EP 4 380 810 B1**
(45) Date de publication et mention de la délivrance du brevet: **03.09.2025**
(21) Numéro de dépôt: 22744781.0
(22) Date de dépôt: 25.07.2022
(51) Int. Cl.: B60K 6/445, B60K 6/40, B60K 6/405, F16H 63/34, F16D 63/00, B60K 6/38

(54) **GROUPE MOTOPROPULSEUR POUR VÉHICULE AUTOMOBILE À PROPULSION OU TRACTION HYBRIDE COMPRENANT UN MÉCANISME DE BLOCAGE DU MOTEUR THERMIQUE**
ANTRIEBSSTRANG FÜR EIN HYBRID-ANTRIEBS- ODER ZUGKRAFTFAHRZEUG MIT EINEM MECHANISMUS ZUM BLOCKIEREN DES VERBRENNUNGSMOTORS
POWERTRAIN FOR A HYBRID PROPULSION OR TRACTION MOTOR VEHICLE COMPRISING A MECHANISM FOR BLOCKING THE COMBUSTION ENGINE

(30) Priorité: 03.08.2021 FR 2108438
(43) Date de publication de la demande: 12.06.2024
(73) Titulaire: Horse Powertrain Solutions, S.L.U., 28108 Alcobendas, Madrid (ES)
(72) Inventeur: RAOUL, Michel, 78084 Guyancourt (FR)
(74) Mandataire: Elzaburu S.L.P.
(86) Numéro de dépôt international: PCT/EP2022/070831
(87) Numéro de publication internationale: WO 2023/011964

(56) Documents cités:
- EP-A1- 2 930 040
- CN-B- 104 358 866
- DE-A1- 102009 030 006
- DE-A1- 102019 131 114

## Description

La présente invention concerne le domaine des transmissions pour véhicules automobiles à propulsion ou à traction hybride.

Plus particulièrement, l'invention concerne les groupes motopropulseurs comprenant deux machines électriques et un moteur thermique. Ce dernier est couplé à un porte-satellite, la génératrice au planétaire et le véhicule à la couronne par l'intermédiaire de trains de pignons.

La présente invention concerne notamment les variateurs de vitesses, ou transmissions dites infiniment variables, ou Continuously variable transmission, d'acronyme CVT en termes anglo-saxons, dont le rapport entre la vitesse d'entrée et la vitesse de sortie varie de manière continue.

Plus précisément, la présente invention a pour objet une transmission infiniment variable à train épicycloïdal diviseur de puissance, qui relie mécaniquement un moteur thermique et deux machines électriques échangeant entre elles de la puissance électrique.

Dans une telle transmission, la puissance mécanique du moteur thermique se répartit au niveau d'un élément d'entrée du train entre une première voie de puissance, où la puissance est prélevée par une première machine électrique, et une deuxième voie de puissance, où la puissance est réunie à la puissance mécanique du deuxième moteur électrique. La puissance mécanique se regroupe sur un élément de sortie du train, d'où elle est transmise aux roues du véhicule sur un rapport de transmission variable en fonction de la puissance électrique échangée entre les deux machines électriques.

Les transmissions dites « hybrides » sont généralement utilisées en mode dit « full hybride » ou « hybride rechargeable ». Lors de l'utilisation de la transmission en mode hybride rechargeable, il est préférable d'utiliser la machine électrique dite génératrice en motrice. Le couplage des deux machines électriques en roulage électrique est avantageux puisqu'il permet de réduire la taille des machines électriques. La transmission de la puissance de la génératrice aux roues du véhicule est possible via le train planétaire qui joue alors le rôle de réducteur, à condition de bloquer le porte-satellite.

Afin de bloquer le porte-satellite lié au moteur thermique, il est connu d'utiliser un système de roue-libre.

On peut se référer à cet égard au document US 5, 788, 006 qui décrit une chaîne cinématique hybride dite « e-CVT », comportant un moteur thermique et une transmission basée sur un train épicycloïdal, utilisant deux machines électriques pour faire varier son rapport de démultiplication. Le moteur thermique est connecté au porte-satellite du train. Une première machine électrique est connectée au planétaire. En faisant varier sa vitesse, on fait varier le ratio entre le moteur thermique et les roues, qui sont connectées à la couronne du train, ainsi qu'à une deuxième machine électrique. L'arbre du porte satellite est bloqué en rotation par une roue libre qui permet d'utiliser la génératrice uniquement en marche avant.

Toutefois, un tel système permet de bloquer le porte-satellite lié au moteur thermique uniquement en marche avant.

D'autre part, le document DE 10 2019 131114 A1 concerne un frein moteur pour un véhicule hybride. Plus précisément, un groupe motopropulseur à répartition de puissance comprend un frein à commande électrique qui engage sélectivement une couronne dentée fixée à un volant d'inertie. La couronne dentée peut être par exemple une couronne dentée de démarrage. L'application du frein alors que le moteur est arrêté permet d'utiliser les deux machines électriques pour fournir du couple aux roues du véhicule, augmentant ainsi la capacité de couple électrique du groupe motopropulseur. La position du frein est plus peu encombrante que celle des freins traditionnels sur arbre d'entrée.

Il est également important de pouvoir utiliser les deux machines électriques en marche arrière. La non-possibilité de faire appel à la génératrice en marche arrière peut conduire à surdimensionner la machine de traction.

Le surdimensionnement des machines électriques implique une surconsommation électrique dépendant de l'utilisation du véhicule et un encombrement accru des machines électriques.

Il existe un besoin d'améliorer les transmissions hybrides de véhicules automobiles de l'état de la technique.

L'objet de la présente invention est donc de fournir un groupe motopropulseur électrique dont les performances énergétiques sont améliorées.

L'invention a pour objet un groupe motopropulseur pour véhicule automobile à propulsion ou traction hybride comme défini dans la revendication 1, comprenant :
- une première machine comprenant un rotor solidaire du planétaire d'un train planétaire de division de puissance, et configuré pour être couplé ou découplé des roues du véhicule par l'intermédiaire d'un ensemble différentiel,
- une deuxième machine comprenant un rotor solidaire d'un arbre secondaire et configuré pour être couplé ou découplé des roues du véhicule par l'intermédiaire d'un ensemble différentiel, et
- un moteur thermique.

Le groupe motopropulseur comprend un mécanisme de blocage du moteur thermique comprenant un doigt de blocage pivotant commandé configuré pour coopérer avec au moins un cran supporté par un élément tournant du moteur thermique lié au vilebrequin.

Il est ainsi possible de bloquer le moteur thermique dans les deux sens de rotation, ce qui permet d'utiliser la génératrice en motrice en marche avant et en marche arrière.

Avantageusement, le doigt de blocage pivotant comprend au moins un ergot configuré pour coopérer avec le cran.

Selon l'invention, le doigt de blocage est monté pivotant autour de son axe.

Selon l'invention, le mécanisme de blocage comprend un premier et un deuxième carters, l'axe de pivotement du doigt de blocage étant supporté par des paliers portés par les premier et deuxième carters.

Selon l'invention, le mécanisme de blocage comprend un système de commande configuré pour mettre en rotation le doigt de blocage.

Ledit système de commande comprend :
- un moteur électrique de commande supporté dans le premier carter,
- une vis montée sur l'axe du moteur électrique,
- un écrou comprenant une tête d'écrou coopérant avec la vis et comprenant un axe d'écrou coaxial à l'axe du moteur électrique et s'étendant du côté opposé audit moteur électrique,
- un pion de blocage en rotation de l'écrou, ledit pion étant solidaire du premier carter et parallèle à l'axe du moteur électrique.

Ainsi, l'écrou ne peut réaliser qu'un mouvement purement axial.

Ledit système de commande comprend en outre une olive montée coulissante sur l'axe de l'écrou et maintenue en appui sur une goupille d'arrêt par un ressort d'engagement monté entre la tête de l'écrou et l'olive, l'olive étant configurée pour mettre en rotation le doigt de blocage pivotant lors de son déplacement axial.

Par exemple, l'écrou est supporté par deux paliers montés respectivement dans le premier et le deuxième carter.

Avantageusement, le groupe motopropulseur comprend un carter du volant moteur, le mécanisme de blocage étant supporté par le carter du volant moteur.

Le groupe motopropulseur peut, par exemple, intégrer une transmission électrique infiniment variable et à dérivation de puissance, ou electrical Continuously variable transmission, d'acronyme e-CVT en termes anglo-saxons, comprenant un train épicycloïdal diviseur de puissance configuré pour relier mécaniquement le moteur thermique et les deux machines électriques échangeant entre elles de la puissance électrique.

Selon un second aspect, l'invention concerne un véhicule automobile à propulsion ou traction hybride comprenant au moins deux roues motrices et un groupe motopropulseur, tel que décrit précédemment, configuré pour entraîner en rotation lesdites roues motrices.

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] représente une vue longitudinale schématique d'un groupe motopropulseur de type à transmission électrique infiniment variable, ou electrical Continuously variable transmission, d'acronyme e-CVT en termes anglo-saxons, d'un véhicule automobile selon un mode de réalisation de l'invention comprenant un dispositif de blocage du moteur thermique ;
[Fig 2] est une vue en coupe partielle du dispositif de blocage du moteur thermique de la figure 1, en situation de blocage du volant moteur ; et
[Fig 3] est une vue en coupe partielle du dispositif de blocage du moteur thermique de la figure 1, en situation de non blocage du volant moteur.

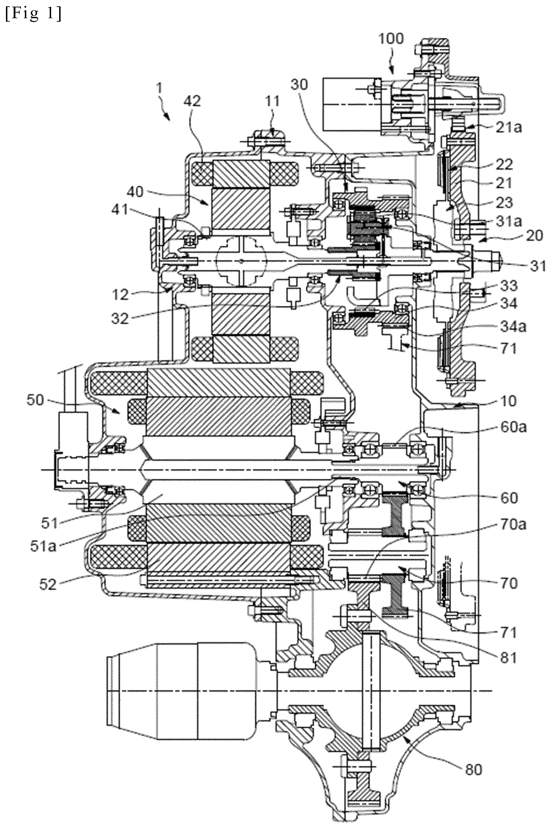

Tel qu'illustré très schématiquement sur la figure 1, un groupe motopropulseur de type hybride, référencé 1 dans son ensemble, est destiné à être intégré dans un véhicule automobile à propulsion ou à traction hybride (non représenté).

Le groupe motopropulseur 1 comprend deux machines électriques 40, 50 destinées chacune à entraîner un arbre d'entraînement (non représenté) des roues motrices du véhicule par l'intermédiaire d'un ensemble différentiel 80. Les machines électriques 40, 50 comprennent chacune leur propre chemin de transmission de puissance.

Le groupe motopropulseur 1 comprend en outre un moteur thermique représenté par son vilebrequin 20.

Le groupe motopropulseur 1 intègre une transmission électrique infiniment variable et à dérivation de puissance, ou electrical Continuously variable transmission, d'acronyme e-CVT en termes anglo-saxons, comprenant un train épicycloïdal 30 diviseur de puissance qui relie mécaniquement le moteur thermique 20 et les deux machines électriques 40, 50 échangeant entre elles de la puissance électrique.

Tel qu'illustré, les éléments du train épicycloïdal 30 comprennent un porte-satellite 31 relié au moteur thermique et notamment à son vilebrequin 20, un planétaire 32 relié à la première machine électrique 40 utilisée principalement en génératrice et une couronne 33 reliée au différentiel 80 par deux étages de pignons (non référencés) portés par un arbre intermédiaire 70.

La seconde machine électrique 50 est principalement utilisée en motrice et est reliée au différentiel 80 par deux étages de pignons (non référencés) portés par un arbre secondaire 60 et l'arbre intermédiaire 70. Les étages de pignons sont connus et ne seront pas davantage décrits.

Tel qu'illustré, le groupe motopropulseur 1 comprend trois carters distincts 10, 11, 12, à savoir un carter 10 de volant moteur et du différentiel, un carter 11 des mécanismes et un carter 12 des machines électriques.

Le carter 10 du volant moteur intègre le vilebrequin 20, un volant d'inertie 21 de moteur thermique, un limiteur de couple 22 et un amortisseur de vibration de torsion 23.

Le carter 10 du volant moteur et le carter 11 des mécanismes délimitent entre eux un premier compartiment (non référencé) dans lequel est monté l'ensemble de la mécanique, tels que notamment les moyens de transmission de puissance, les systèmes de couplage, le mécanisme d'engagement d'un frein de stationnement, etc...

Le carter 11 des mécanismes et le carter 12 des machines électriques délimitent entre eux un deuxième compartiment (non référencé) dans lequel sont montées les deux machines électriques 40, 50.

La première machine électrique 40 nommée génératrice comprend un arbre rotor 41 et un stator 42.

L'arbre rotor 41 supporte à son extrémité le pignon central du train diviseur de puissance 30, le planétaire 32.

Le planétaire 32 coopère avec les pignons 31a (dont un seul est représenté), et portés par le porte-satellite 31. Le porte satellite, élément central du train 30, est relié au moyeu amortisseur 23 du volant 21 solidaire du vilebrequin 20 du moteur thermique.

La porte-satellite est guidé d'une part dans le carter volant 10 par un roulement (non référencé) et d'autre part les dentures de ses satellites, intérieurement, dans des dentures du planétaire 32 et extérieurement et dans les dentures de la couronne 33 du train 30.

La couronne de train 33, élément extérieur de sortie de puissance du train 30 est portée par le manchon 34 supporté par des roulements (non référencés) dans les carters 10 et 11. Ce manchon porte à sa périphérie une denture 34a qui, par engrènement avec le pignon 71 porté par l'arbre 70, lui transmet la puissance du moteur thermique non prélevée par la génératrice 40. Puis la denture 70a de l'arbre 70 transmet à son tour la puissance à la couronne 81 rapportée sur le différentiel 80 relié par des arbres (non représentés) aux roues du véhicule.

La deuxième machine électrique 50 ou machine principale comprend un rotor 51 et un stator 52. Le rotor 51 se termine par une cannelure 51a qui permet d'entraîner l'arbre primaire 60. La denture 60a transmet la puissance de la motrice 50 au pignon 71 porté par l'arbre 70. Ensuite, la denture 70a de l'arbre 70 transmet à son tour la puissance à la couronne 81 rapportée sur le différentiel 80 relié par des arbres (non représentés) aux roues du véhicule.

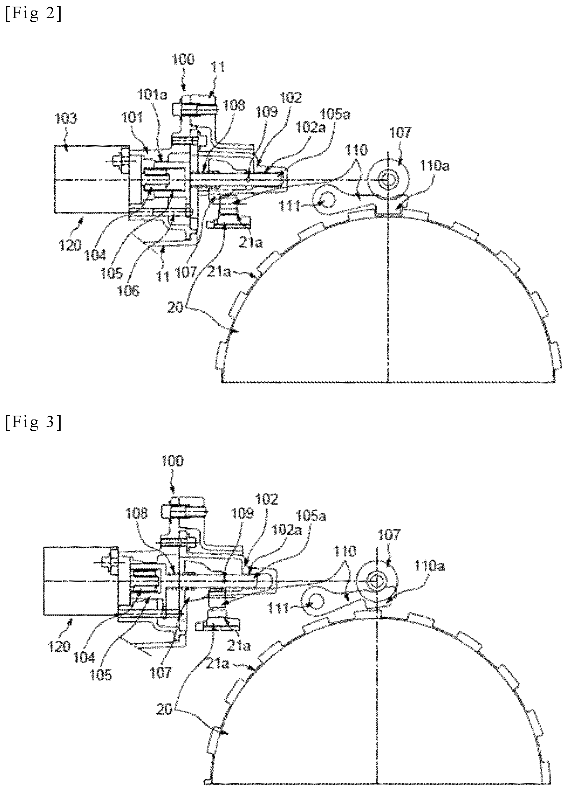

Tel qu'illustré en détails sur les figures 2 et 3, le groupe motopropulseur 1 comprend un mécanisme 100 de blocage du moteur thermique, et notamment du volant moteur 21.

Le mécanisme 100 de blocage est monté sur le carter 10 de volant moteur et comprend un premier carter 101 et un deuxième carter 102.

Le mécanisme 100 de blocage comprend un système 120 de commande comportant un moteur électrique 103 de commande supporté dans le premier carter 101, une vis 104 montée sur l'axe du moteur électrique 103, un écrou 105 coopérant avec la vis 104 et supporté par deux paliers 101a, 102a montés respectivement dans le premier et le deuxième carter 101, 102.

L'écrou 105 comprend un axe d'écrou 105a coaxial à l'axe du moteur électrique 103 et s'étendant du côté opposé audit moteur électrique 103.

Le système 120 de commande comprend en outre un pion 106 solidaire du premier carter 101, parallèle à l'axe du moteur électrique 103 et coopérant avec l'écrou 105 afin de le bloquer en rotation.

Ainsi, l'écrou 105 ne peut réaliser qu'un mouvement purement axial.

Le système 120 de commande comprend en outre une olive 107 montée coulissante sur l'axe 105a de l'écrou 105 et maintenue en appui sur une goupille d'arrêt 109 par un ressort d'engagement 108 monté entre la tête de l'écrou 105 et l'olive 107.

Le mécanisme 100 de blocage comprend en outre un doigt de blocage pivotant 110 comprenant un ergot 110a coopérant avec des crans 21a situés à la périphérie du volant moteur 21.

Le doigt de blocage 110 est pivotant autour de son axe 111, dont les paliers (non représentés) sont portés par les premier et deuxième carters 101, 102.

L'olive 107, en se déplaçant axialement, vient à la rencontre du doigt de blocage pivotant 110.

Lorsque le véhicule est en mode roulage électrique, le moteur thermique est à l'arrêt et l'ergot 110a du doigt de blocage 110 est engagé dans l'un des crans 21a du volant moteur 21.

La position angulaire aléatoire du volant moteur 21 à l'arrêt implique que l'engagement des crans 21a avec l'ergot 110a du doigt de blocage 110 n'est pas assuré.

Dans ce cas, le doigt de blocage 110 ne peut réaliser la rotation complète d'engagement et l'olive 107 ne parcourt pas sa course totale. Toutefois, l'écrou 105 continue sans course nominale et met l'olive sous tension par l'intermédiaire du ressort 108 qui se comprime. Ainsi, la mise en marche de la génératrice 40 mettra en rotation le volant moteur 21 dans la mesure où le couple d'appui demandé au porte-satellite dépasse celui de la traînée du moteur.

Dès la première concordance de l'ergot 110a du doigt de blocage 110 dans un des crans 21a du volant moteur 21, le ressort 108 aura pour effet de repousser instantanément l'olive 107 et ainsi achever l'engagement du doigt de blocage 110.

Le mécanisme de blocage 100 permet ainsi à la génératrice 40, en s'appuyant sur le porte-satellite 31, de transmettre toute la puissance demandée à la couronne 33 du train planétaire 30, puis aux roues du véhicule, par l'intermédiaire de l'arbre intermédiaire 70 et du différentiel 80.

Le blocage par le mécanisme de blocage 100 fonctionne dans les deux sens de rotation et est utilisable en marche arrière et en marche avant.

Lorsqu'il y a un changement du mode de roulage du véhicule vers un mode hybride, le volant moteur 21 doit être libéré du mécanisme de blocage 100.

Dans ce cas, le moteur électrique 103 du mécanisme de blocage 100, par l'intermédiaire de la vis 104, déplace l'écrou 105 vers le moteur 103, ce qui entraîne à son tour l'olive 107 par l'intermédiaire de la goupille 109. L'ergot 110a du doigt de blocage 110 se dégage du cran 21a du volant moteur 21 grâce à un organe de rappel (non représenté), par exemple un ressort.

Grâce à l'invention, il est ainsi possible de bloquer le porte-satellite lié au moteur thermique dans les deux sens de rotation, ce qui permet d'utiliser la génératrice en motrice en marche avant et en marche arrière et ainsi, en mode roulage électrique, d'utiliser les deux machines électriques en marche avant et en marche arrière afin d'optimiser les dimensions des machines électriques.

## Revendications

1. Groupe motopropulseur pour véhicule automobile à propulsion ou traction hybride comprenant :
- une première machine (40) comprenant un rotor (41) solidaire du planétaire (32) d'un train planétaire (30) de division de puissance, et configuré pour être couplé des roues du véhicule par l'intermédiaire d'un ensemble différentiel (80),
- une deuxième machine (50) comprenant un rotor (51) solidaire d'un arbre secondaire (60), et configuré pour être couplé des roues du véhicule par l'intermédiaire de l'ensemble différentiel (80),
- un moteur thermique (20), et
- un mécanisme (100) de blocage du moteur thermique comprenant un doigt de blocage pivotant (110) commandé configuré pour coopérer avec au moins un cran (21a) supportés par un élément tournant (21) du moteur thermique lié au vilebrequin (20) ;
dans lequel le doigt de blocage (110) est monté pivotant autour de son axe (111) ;
dans lequel le mécanisme (100) de blocage comprend un système (120) de commande configuré pour mettre en rotation le doigt de blocage (110) ;
**caractérisé en ce que** le mécanisme de blocage (100) comprend un premier et un deuxième carter (101, 102), l'axe (111) de pivotement du doigt de blocage (110) étant supporté par des paliers portés par les premier et deuxième carters (101, 102) ; et
**en ce que** le système (120) de commande comprend :
- un moteur électrique (103) de commande supporté dans le premier carter (101),
- une vis (104) montée sur l'axe du moteur électrique (103),
- un écrou (105) coopérant avec la vis (104) et comprenant un axe d'écrou (105a) coaxial à l'axe du moteur électrique (103) et s'étendant du côté opposé audit moteur électrique (103),
- un pion (106) de blocage en rotation de l'écrou (105), ledit pion (106) étant solidaire du premier carter (101) et parallèle à l'axe du moteur électrique (103), et
- une olive (107) montée coulissante sur l'axe (105a) de l'écrou (105) et maintenue en appui sur une goupille d'arrêt (109) par un ressort d'engagement (108) monté entre la tête de l'écrou (105) et l'olive (107), l'olive (107) étant configurée pour mettre en rotation le doigt de blocage pivotant (110) lors de son déplacement axial.

2. Groupe motopropulseur selon la revendication 1, dans lequel le doigt de blocage pivotant (110) comprend au moins un ergot (110a) configuré pour coopérer avec le cran (21a).

3. Groupe motopropulseur selon l'une quelconque des revendications 1 à 2, dans lequel le cran (21a) est supporté par le volant moteur (21).

4. Groupe motopropulseur selon la revendication 1, dans lequel l'écrou (105) est supporté par deux paliers (101a, 102a) montés respectivement dans le premier et le deuxième carters (101, 102).

5. Groupe motopropulseur selon l'une quelconque des revendications précédentes, comprenant un carter (10) du volant moteur et dans lequel, le mécanisme (100) de blocage est supporté par le carter (10) du volant moteur.

6. Groupe motopropulseur selon l'une quelconque des revendications précédentes, dans lequel le groupe motopropulseur (1) intègre une transmission électrique infiniment variable et à dérivation de puissance comprenant le train planétaire (30) diviseur de puissance configuré pour relier mécaniquement le moteur thermique (20) et les deux machines électriques (40, 50) échangeant entre elles de la puissance électrique.

7. Véhicule automobile à propulsion ou traction hybride comprenant au moins deux roues motrices et un groupe motopropulseur (1) selon l'une quelconque des revendications précédentes configuré pour entraîner en rotation lesdites roues motrices.

## Patentansprüche

1. Antriebsstrang für Kraftfahrzeuge mit Hybridantrieb oder -traktion, Folgendes umfassend:
- eine erste Maschine (40), die einen Rotor (41) umfasst, der am Sonnenrad (32) eines leistungsverteilenden Planetengetriebes (30) befestigt ist und konfiguriert ist, über eine Differentialbaugruppe (80) mit den Rädern des Fahrzeugs gekoppelt werden zu können,
- eine zweite Maschine (50), die einen Rotor (51) umfasst, der an einer Sekundärwelle (60) befestigt und konfiguriert ist, über die Differentialbaugruppe (80) MIT DEN RÄDERN DES FAHRZEUGS GEKOPPELT ZU WERDEN,
- einen Verbrennungsmotor (20) und
- einen Arretiermechanismus (100) des Verbrennungsmotors, der einen gesteuerten schwenkbaren Arretierfinger (110) umfasst, der konfiguriert ist, mit mindestens einer Raste (21a) zusammenzuwirken, die von einem mit der Kurbelwelle (20) verbundenen rotierenden Element (21) des Verbrennungsmotors getragen wird;
wobei der Arretierfinger (110) um seine Achse (111) drehbar gelagert ist;
wobei der Arretiermechanismus (100) ein Steuerungssystem (120) umfasst, das konfiguriert ist, den Arretierfinger (110) in Drehung zu versetzen; **dadurch gekennzeichnet, dass** der Arretiermechanismus (100) ein erstes und ein zweites Gehäuse (101, 102) umfasst, wobei die drehbar gelagerte Achse (111) des Arretierfingers (110) durch Lager gestützt wird, die von dem ersten und zweiten Gehäuse (101, 102) getragen werden; und dass das Steuerungssystem (120) umfasst:
- einen im ersten Gehäuse (101) gelagerten Elektromotor (103),
- eine Schraube (104), die auf der Achse des Elektromotors (103) montiert ist,
- eine Mutter (105), die mit der Schraube (104) zusammenwirkt und eine zur Achse des Elektromotors (103) koaxiale Mutterachse (105a) umfasst, die sich auf der dem Elektromotor (103) gegenüberliegenden Seite erstreckt,
- einen Stift (106) zum Arretieren der Mutter (105) bei der Drehung, wobei der Stift (106) am ersten Gehäuse (101) befestigt ist und parallel zur Achse des Elektromotors (103) ist, und
- einen Knopf (107), der gleitend auf der Achse (105a) der Mutter (105) montiert ist und durch eine zwischen dem Kopf der Mutter (105) und der Knopf(107) montierte Einrastfeder (108) von einem Arretierstift (109) gehalten wird, wobei der Knopf (107) konfiguriert ist, den schwenkbaren Arretierfinger (110) bei seiner axialen Bewegung zu drehen.

2. Antriebsstrang nach Anspruch 1, wobei der schwenkbare Arretierfinger (110) mindestens einen Vorsprung (110a) umfasst, der konfiguriert ist, mit der Raste (21a) zusammenzuwirken.

3. Antriebsstrang nach einem der Ansprüche 1 bis 2, bei dem die Raste (21a) vom Schwungrad (21) getragen wird.

4. Antriebsstrang nach Anspruch 1, bei dem die Mutter (105) von zwei Lagern (101a, 102a) getragen wird, die jeweils im ersten und zweiten Gehäuse (101, 102) montiert sind.

5. Antriebsstrang nach einem der vorhergehenden Ansprüche mit einem Schwungradgehäuse (10), bei dem der Arretiermechanismus (100) vom Schwungradgehäuse (10) getragen wird.

6. Antriebsstrang nach einem der vorhergehenden Ansprüche, bei dem der Antriebsstrang (1) ein stufenlos verstellbares und leistungsverteilendes Planetengetriebe (30) umfasst, das konfiguriert ist, den Verbrennungsmotor (20) mechanisch zu verbinden, und die beiden elektrischen Maschinen (40, 50) elektrische Leistung untereinander auszutauschen.

7. Kraftfahrzeug mit Hybridantrieb oder -traktion, das mindestens zwei Antriebsräder und einen Antriebsstrang (1) nach einem der vorhergehenden Ansprüche umfasst, der zum Drehen der Antriebsräder konfiguriert ist.

## Claims

1. Powertrain for a hybrid propulsion or hybrid traction motor vehicle, comprising:
- a first machine (40) comprising a rotor (41) rigidly attached to the planetary gear (32) of a power-splitting planetary gearset (30), and configured to be coupled to the vehicle's wheels via a differential assembly (80);
- a second machine (50) comprising a rotor (51) rigidly attached to a secondary shaft (60), and configured to be coupled to the vehicle's wheels via the differential assembly (80);
- a thermal engine (20); and
- a thermal engine locking mechanism (100) comprising a controlled pivoting locking finger (110) configured to cooperate with at least one notch (21a) supported by a rotating element (21) of the thermal engine connected to the crankshaft (20);
wherein the locking finger (110) is pivotally mounted about its axis (111);
wherein the locking mechanism (100) comprises a control system (120) configured to rotate the locking finger (110);
**characterised in that** the locking mechanism (100) comprises first and second housings (101, 102), the pivot axis (111) of the locking finger (110) being supported by bearings carried by the first and second housings (101, 102); and **in that** the control system (120) comprises:
- an electric control motor (103) supported in the first housing (101);
- a screw (104) mounted on the shaft of the electric motor (103);
- a nut (105) co-operating with the screw (104) and comprising a nut axis (105a) coaxial with the axis of the electric motor (103) and extending on the side opposite the electric motor (103);
- a rotation-blocking pin (106) for the nut (105), said pin (106) being rigidly attached to the first housing (101) and parallel to the axis of the electric motor (103); and
- a cam (107) slidably mounted on the nut axis (105a) and held against a stop pin (109) by an engagement spring (108) positioned between the nut head and the cam (107), the cam (107) being configured to rotate the pivoting locking finger (110) during its axial movement.

2. Powertrain according to claim 1, wherein the pivoting locking finger (110) comprises at least one lug (110a) configured to cooperate with the notch (21a).

3. Powertrain according to any one of claims 1 or 2, wherein the notch (21a) is supported by the flywheel (21).

4. Powertrain according to claim 1, wherein the nut (105) is supported by two bearings (101a, 102a) mounted in the first and second casings (101, 102), respectively.

5. Powertrain according to any one of the preceding claims, comprising a flywheel housing (10), and wherein the locking mechanism (100) is supported by the flywheel housing (10).

6. Powertrain according to any one of the preceding claims, wherein the powertrain (1) incorporates a continuously variable and power-splitting electric transmission comprising the planetary gearset (30), configured to mechanically connect the thermal engine (20) and the two electric machines (40, 50) which exchange electrical power with each other.

7. Motor vehicle with hybrid propulsion or hybrid traction, comprising at least two drive wheels and a powertrain (1) according to any one of the preceding claims, configured to rotationally drive said drive wheels.
